# EUROPÄISCHE PATENTSCHRIFT

(11) **EP 2 247 433 B1**
(45) Veröffentlichungstag und Bekanntmachung des Hinweises auf die Patenterteilung: **23.03.2016**
(21) Anmeldenummer: 09716908.0
(22) Anmeldetag: 16.01.2009
(51) Int. Cl.: B29C 65/20, H05B 33/22

(54) **ELEKTRISCHER HEIZKEIL**
ELECTRIC HEATING WEDGE
CLAVETTE ÉLECTRIQUE CHAUFFANTE

(30) Priorität: 05.03.2008 DE 202008003136 U
(43) Veröffentlichungstag der Anmeldung: 10.11.2010
(73) Patentinhaber: Leister Technologies AG, 6056 Kägiswil (CH)
(72) Erfinder: GUBLER, Ulrich, CH-6343 Rotkreuz (CH); KÜHL, Hannes, 96361 Steinbach am Wald (DE)
(74) Vertreter: Klocke, Peter
(86) Internationale Anmeldenummer: PCT/EP2009/000235
(87) Internationale Veröffentlichungsnummer: WO 2009/109260

(56) Entgegenhaltungen:
- DE-A1- 3 640 187
- DE-A1-102004 051 045
- DE-A1-102006 016 695
- GB-A- 817 913

## Beschreibung

Die Erfindung betrifft einen elektrischen Heizkeil für eine Schweißeinrichtung zum nahtförmigen Verbinden von Kunststoffbahnen, mit einem Schweißkeil und einer Schweißkeilaufhängung, wobei der Schweißkeil mindestens einen elektrischen Heizwiderstand mit einem Heizleiter aufweist, der als Leitschicht stoffschlüssig auf einen keramischen Träger aufgebracht und vorzugsweise von einer keramischen Deckschicht geschützt ist.

Elektrische Heizkeile zum randseitigen Verbinden von Kunststoffbahnen sind an sich bekannt und werden insbesondere bei automatischen Schweißeinrichtungen in verschiedensten Ausführungsformen eingesetzt. Mittels dem Heizkeil werden beim Überlappungsschweißen von Kunststoffbahnen die Kunststoffbahnen an ihren Kontaktflächen plastifiziert und anschließend unter Druckeinwirkung abgekühlt, wodurch eine stoffschlüssige Verbindung der Kunststoffbahnen erreicht wird. Bekannte Schweißkeile sind üblicherweise aus Metall hergestellt und weisen damit ein für den Schweißvorgang erforderliches hohes Wärmeleitvermögen auf. Sie werden in der Regel von zylindrischen ausgebildeten elektrischen Heizpatronen erwärmt, die in den Heizkeil eingebettet sind, um diesen auf eine Temperatur oberhalb der Schmelztemperatur der Kunststoffbahnen zu erhitzen. Abhängig von der Art der zu verbindenden Kunststoffe werden oft Heizkeile aus unterschiedlichen Metallen, beispielsweise aus Aluminium, Kupfer, Silber oder Stahl verwendet. Heizkeile aus Aluminium, Kupfer oder Silber müssen aufgrund ihrer geringen Abriebfestigkeit und Korossionsbeständigkeit häufig nach einer geringen Nutzungsdauer ersetzt werden. Heizkeile aus Stahl sind diesen gegenüber beständiger, benötigen jedoch lange Aufheizzeiten und weisen eine deutlich schlechtere Wärmeverteilung auf.

Aus der DE 10 2004 051 045 A1 ist ein elektrischer Heizkeil bekannt, der zur Vermeidung der vorstehend aufgeführten Nachteile aus einem keramischen Werkstoff oder aus einem Keramikverbundwerkstoff besteht, wobei der Verbundwerkstoff aus einem keramischen Basiswerkstoff und einem gut wärmeleitenden Metall oder Halbmetall zusammengesetzt ist. Der offenbarte Heizkeil ist für unterschiedliche Kunststoffmaterialien einsetzbar. Er weist eine hohe mechanische Festigkeit, eine hohe Abriebbeständigkeit und eine hohe Temperatur- und Thermoschockbeständigkeit auf. Außerdem besitzt er eine hohe Korossionsbeständigkeit gegenüber auftretenden chemischen Einflüssen und verhindert ein Anhaften von Rückständen der jeweils erhitzten Kunststoffe weitgehend.

Es ist bekannt, dass Kunststoffbahnen aus unterschiedlichen Materialien ein unterschiedliches Schweißverhalten besitzen. Daher kann es beim Verschweißen von bestimmten Kunststoffbahnen vorkommen, dass an den Rändern der Schweißnaht und oder an den an die Schweißnaht angrenzenden Randzonen wellenartige Verformungen auftreten, welche die Gebrauchsfähigkeit der geschweißten Bahnen erheblich beeinträchtigen können. Zur Vermeidung derartiger Probleme ist aus der DE 36 40 187 A1 ein Schweißkeil bekannt, der von der Mitte in Richtung seiner Seitenkanten ein abnehmendes Wärmeübertragungsvermögen aufweist. Dazu ist der Heizkeil in wenigstens drei unmittelbar aneinander grenzende, parallel zur Vorschubrichtung verlaufende Abschnitte unterteilt, von denen der mittlere Abschnitt aus einem Werkstoff mit hoher Wärmeleitfähigkeit und der jeweils äußere Abschnitt aus einem Werkstoff mit niedriger Wärmeleitfähigkeit besteht. Damit sind Temperaturzonen unterschiedlicher Temperatur festgelegt, die quer zur Vorschubrichtung des Heizkreis nebeneinander angeordnet sind, deren Temperaturunterschiede im wesentlichen von den verwendeten Werkstoffen bestimmt ist. Die Temperaturen der beiden äußeren Temperaturzonen sind direkt an die Temperatur der mittleren Temperaturzone gekoppelt.

Zum Stand der Technik wird außerdem auf die Druckschriften DE 10 2006 016 695 A1 und GB 817,913 A verwiesen.

Die Offenlegungsschrift DE 10 2006 016 695 A1 offenbart ein elektrisches Heizelement, insbesondere für eine Heizkeil-Folienschweißeinrichtung mit zwei Elektroden und einen zwischen den Elektroden angeordneten Heizwiderstand, so dass ein Anlegen einer elektrischen Spannung an die Elektroden die Erzeugung von Wärme über die Länge des Heizwiderstandes bewirkt. Der Heizwiderstand ist entsprechend der Form eines Heizkeiles ausgebildet, wobei eine Oberseite und eine der Oberseite gegenüberliegende Unterseite des Heizwiderstandes unter einem spitzen Winkel zusammenlaufen. Der Heizwiderstand ist vorzugsweise aus einem elektrisch leitfähigen Keramikmaterial hergestellt.

Die Druckschrift GB 817,913 A lehrt eine andere Widerstandsheizeinrichtung für ein Heizkeil-Folienschweißgerät. Die Heizeinrichtung weist zwei streifenförmige, parallel zueinander verlaufende, voneinander elektrisch isolierte Stromzuführungsleisten auf, die an einem freien Ende einen V-förmig gebogenen Blechstreifen als Widerstandsheizelement tragen. Der elektrische Widerstand der Stromzuführungsleisten ist gegenüber dem des Widerstandsheizelementes geringer vorgesehen, wobei bei einer Variante zwischen den Schenkeln des V-förmigen Widerstandsheizelementes eine elektrisch isolierende Stützstruktur, vorzugsweise aus Keramikmaterial vorgesehen ist.

Keramische Teile von elektrischen Heizkeilen sind gegenüber metallischen Ausführungsformen im rauen Alltagsbetrieb in einem hohen Maße bruchgefährdet. Der Erfindung liegt daher die Aufgabe zugrunde, einen elektrischen Heizkeilvorzuschlagen, bei dem die Bruchgefahr der keramischen Teile deutlich minimiert ist und der vorzugsweise ein variabel einstellbares Temperaturprofil aufweist.

Diese Aufgabe wird erfindungsgemäß durch einen elektrischen Heizkeil mit den Merkmalen des Anspruchs 1 gelöst. Weitere vorteilhafte Ausgestaltungen sind den Unteransprüchen zu entnehmen.

Danach weist der erfindungsgemäße elektrische Heizkeil eine Schweißkeilaufhängung mit einer seitlichen Stützstruktur aus Metall auf, die sich im Wesentlichen über die gesamte Länge und/oder Breite des elektrischen Heizwiderstandes erstreckt und den keramischen Träger des Heizwiderstandes mechanisch stabilisiert. Dabei kann die Stützstruktur abhängig von der Ausführungsform des Schweißkeils, im Innern des Schweißkeils angeordnet sein und/oder den Schweißkeil in wesentlichen Teilen umschließen. Unter dem Begriff Schweißkeil ist derjenige Teil des Heizkeils zu verstehen, der mit den zu verscheißenden Kunststoffbahnen beim Schweißvorgang in Kontakt steht, während mit Schweißaufhängung derjenige Teil des Heizkeils gemeint ist, mit dem der Schweißkeil an einem Gestell einer Schweißeinrichtung lösbar befestigt ist.

Um eine schnelle und gleichmäßige Wärmeverteilung in dem Schweißkeil sicherzustellen hat es sich als günstig erwiesen, den Schweißkeil direkt zu beheizen. Dazu ist der elektrische Heizwiderstand nicht, wie beim Stand der Technik, in der Schweißkeilaufhängung sondern direkt in oder auf dem Schweißkeil angeordnet.

Für die Aufheizung des Schweißkeils wird ein Heizwiderstand verwendet, dessen Heizleiter als Leitschicht auf einem Keramikträger aufgebracht ist, wobei der Heizleiter von einer abriebfesten, isolierenden Deckschicht geschützt ist. Dabei ist es von Vorteil, wenn sich der keramischen Heizwiderstand über einen Großteil des Fläche des Schweißkeils erstreckt, wobei der Körper des Schweißkeils metallischer oder keramischer Natur sein kann.

Prinzipiell gibt es dafür zwei mögliche bevorzugte Ausführungsformen. Zum Einen sind flache plattenförmige Heizelemente bekannt und in beliebigen Größen verfügbar bzw. anfertigbar, die den vorstehend beschrieben Aufbau aufweisen. Solche herkömmliche Heizelemente können als Heizwiderstand direkt in entsprechende vorgesehene flache Kammern des Körpers des Schweißkeils eingebettet werden. Zum Anderen kann der Körper des Schweißkeiles selbst aus einem elektrisch isolierenden Keramikmaterial hergestellt sein und den Keramikträger bilden, auf den der Heizleiter als Leitschicht aufgebracht ist. Damit weist der Körper des Schweißkeils ein mit Metall vergleichbares Wärmeleitvermögen auf, wobei kein Anhaften der Kunststoffbahnen an der jeweiligen Kontaktfläche des Schweißkeils erfolgt.

Die Ausbildung der Stützstruktur des erfindungsgemäßen elektrischen Heizkeils ist abhängig von der Ausführungsform des Schweißkeils, insbesondere von dem Material aus dem dieser im Wesentlichen hergestellt ist. Dabei kann die Stützstruktur zur Stabilisierung des keramischen Trägers des mindestens einen Heizwiderstandes beispielsweise als Metallmantel ausgebildet sein, der den Heizwiderstand des Schweißkeil in wesentlichen Teilen umschließt, wobei der Metallmantel die für einen Schweißkeil typische Keilform aufweist. Eine solche keilförmige Stützstruktur kann flache keramische Heizelemente oder auch keilförmige keramische Heizwiderstände direkt aufnehmen. Bei einem Schweißkeil mit einem keramischen Körper, auf den die Leitschicht außen aufgebracht ist, kann die Stützstruktur als eine oder mehrere Metallrippen oder Metallplatten ausgebildet sein, die den keramischen Körper des Schweißkeils quer zu der Vorschubrichtung durchsetzen, um den Körper zu stabilisieren. Die Rippe oder Platte kann in einem Kanal des keramischen Körpers lose einliegen oder fest eingebettet sein und fest oder lösbar mit der Schweißkeilaufhängung verbunden sein. In jeden Fall ist es zweckmäßig, den Schweißkeil lösbar an der Schweißkeilaufhängung zu befestigen. Dies kann durch Anpressen oder Klemmen des Schweißkeils erfolgen, wobei es zweckmäßig ist, wenn der Schweißkeil einen seitlich vorstehenden Fortsatz zur Befestigung an der Schweißkeilaufhängung aufweist. Die Stützstruktur ist vorzugsweise aus einem korrosionsbeständigen Metall hergestellt und weist bevorzugt mindestens eine Bohrung, mit oder ohne Gewinde, für eine Befestigungsschraube auf. Die Metallrippe kann beispielsweise eine zylindrische Form zeigen und damit selbst als Befestigungsschraube ausgeführt sein.

Bevorzugt wird außerdem eine Ausführungsform der elektrischen Heizkeils bei der das Material der metallenen Schweißkeilaufhängung Stahl oder Silber ist und/oder das Material für die Leitschicht des Heizwiderstandes ein Metall, eine Metalllegierung oder eine elektrisch leitfähige Keramik ist. Dabei kann die Leitschicht mit allen industrieüblichen und dem Fachmann bekannten Methoden auf den Keramikträger des Heizwiderstandes aufgebracht sein.

In einer Ausführungsform der Erfindung weist der Schweißkeil mindestens zwei Temperaturzonen auf, die vorzugsweise in Vorschubrichtung des Heizkeils, also von seiner Vorderkante zu seiner Hinterkante hin hintereinander angeordnet sind. Die Temperaturzonen können auch quer zur Vorschubrichtung des Heizkeils, also zwischen seinen Seitenkanten nebeneinander angeordnet sein. Dabei können diese unmittelbar aneinander grenzen oder einen gewissen Abstand zueinander aufweisen, wobei sich die Temperaturzonen nur in einem mittleren Bereich des Schweißkeils erstrecken oder bis zu dessen Vorder- und Hinterkante bzw. bis zu seinen Seitenkanten reichen können.

Die Temperaturen der einzelnen Temperaturzonen sind unterschiedlich variabel einstellbar. Dazu sind den mindestens zwei Temperaturzonen entweder jeweils unabhängig voneinander wirkende Heizwiderstände oder ein gemeinsamer Heizwiderstand mit unterschiedlich ausgebildeten Heizzonen zugeordnet. Die Heizleistung der zugeordneten Heizwiderstände, beziehungsweise der zugeordneten Heizzonen des einen Heizwiderstandes, sind vorzugsweise unabhängig voneinander einstellbar und vorzugsweise regelbar. Damit der mindestens eine Heizwiderstand unabhängig auf die Temperaturzonen einwirken kann, ist dieser wie vorstehend beschrieben im Schweißkeil und nicht, wie vom Stand der Technik her bekannt, in der Schweißkeilaufhängung angeordnet. Die Temperaturzonen des Schweißkeils des erfindungsgemäßen Heizkeils wird damit also direkt beheizt, wobei sich die Temperaturzonen jeweils gleichmäßig um die Heizzone(n) des jeweiligen Heizwiderstandes erstrecken. Es hat sich gezeigt, dass der Wärmeübergang von dem Heizleiter des Heizwiderstandes auf den keramischen Körper des Schweißkeiles und damit auf die zu verschweißenden Kunststoffbahnen verbessert ist, wenn der Heizleiter direkt außen auf den Körper des Schweißkeils aufgebracht ist. Damit wird eine schnellere Aufheizung des elektrischen Heizkeils sowie eine effektivere Temperaturregelung erreicht.

In einer Ausführungsform des elektrischen Heizkeils ist die Heizleistung des Schweißkeils im Bereich der Temperaturzonen individuell einstell- und/oder regelbar. Dazu weist der jeweilige zugeordnete Heizwiderstand vorteilhafterweise mindestens einen Temperatursensor auf, der als Leitschicht auf dem Keramikträger aufgebracht ist. Mit dem jeweiligen Temperatursensor kann die tatsächliche Temperatur der verschiedenen Temperaturzonen ermittelt werden. Die so ermittelten Temperaturwerte können zur automatischen Temperaturregelung des Schweißkeils verwendet und/oder zur Anzeige gebracht werden. Zweckmäßig ist es, wenn der Heizwiderstand und der Temperatursensor von einer gemeinsamen Leitschicht gebildet sind. Dabei erfolgt die Temperaturmessung vorzugsweise über eine Leiterbahn des Heizleiters des Heizwiderstandes. Es ist jedoch auch möglich, die Temperaturmessung über eine von dem Heizleiter getrennte Leiterbahn vorzunehmen.

Wird das Temperaturprofil des erfindungsgemäßen Heizkeils durch Einwirken eines einzigen Heizwiderstandes auf die Temperaturzonen erzeugt, der nur einen Heizleiter aufweist, so muss der Heizleiter im Bereich der jeweiligen Temperaturzonen unterschiedlich ausgebildet sein. In einer vorteilhaften Ausführungsform des erfindungsgemäßen elektrischen Heizkeils weist der Heizwiderstand mindestens eine sich mäanderförmig erstreckende Leiterbahn als Heizleiter auf, deren Bahnquerschnitt oder Bahnabstand über die Länge des Heizwiderstandes unterschiedlich ausgebildet ist. Dabei müssen sich der Bahnquerschnitt und/oder der Bahnabstand zumindest im Bereich der mindestens zwei Temperaturzonen voneinander unterscheiden. Wesentlich ist dabei, dass die Heizleistung pro Flächeneinheit in den verschiedenen Temperaturzonen unterschiedlich vorgesehen ist. Für den Fall, dass zwei nicht miteinander verbundene Heizleiter in Form von Leitschichten auf einem gemeinsamen Träger angeordnet sind und diese getrennt voneinander angesteuert werden können, kann der Bahnquerschnitt und/oder der Bahnabstand der beiden "Heizwiderstände" identisch ausgebildet sein.

Nachfolgend wird die Erfindung anhand von Ausführungsbeispielen näher erläutert. Weitere Merkmale der Erfindung ergeben sich aus den beigefügten Zeichnungen und der Beschreibung der Ausführungsbeispiele in Verbindung mit den Ansprüchen. Die einzelnen Merkmale der Erfindung können für sich allein oder zu mehreren bei verschiedenen Ausführungsformen der Erfindung realisiert sein. In einer schematischen Darstellung zeigen:
- Figur 1: eine perspektivische Ansicht eines einstückig aus Metall hergestellten Heizkeils (Stand der Technik), mit einem Schweißkeil und einer Schweißkeilaufhängung;
- Figur 2: eine Darstellung eines ersten erfindungsgemäßen Heizkeils in einer Seiten- und Frontansicht, mit einer Stützstruktur, die im Innern des Schweißkeils angeordnet ist;
- Figur 3: eine Darstellung eines zweiten erfindungsgemäßen Heizkeils in einer Seiten- und Frontansicht, mit einer Stützstruktur, die den Schweißkeil umschließt;

- Figur 4: eine erste Befestigungsart der Heizkeile aus den Figuren 2, 3 in einer Seiten- und Frontansicht;
- Figur 5: den Schweißkeil aus Figur 4 in verschiedenen Ansichten mit außen auf den Körper des Schweißkeils aufgebrachten Heizwiderständen;
- Figur 6: verschiedene Ausbildungen der Leitschicht des Heizwiderstandes für den Schweißkeil gemäß den Figur 3, 4;
- Figur 7: eine zweite Befestigungsart der Heizkeile aus den Figuren 2, 3 in einer Seiten- und Frontansicht; und
- Figur 8: eine zweite Befestigungsart der Heizkeile aus den Figuren 2, 3 in einer Seiten- und Frontansicht.

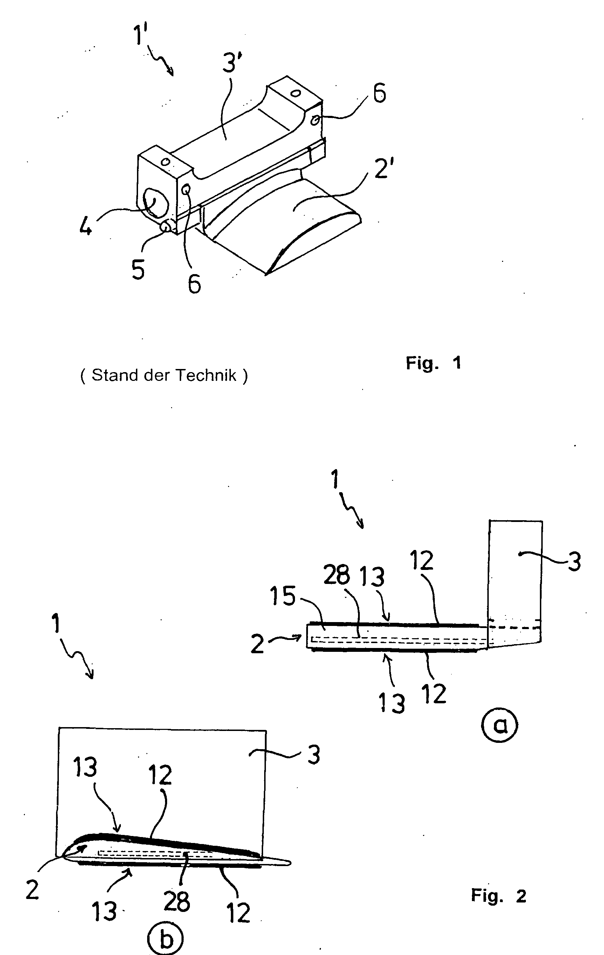

Figur 1 zeigt einen bekannten Heizkeil 1' aus Metall mit einem Schweißkeil 2' und einer Schweißkeilaufhängung 3', der mittels einer in der Zeichnung nicht dargestellten herkömmlichen zylindrischen Heizpatrone erhitzt wird. Im Stand der Technik weist die Schweißkeilaufhängung 3' eine große Bohrung 4 für die Heizpatrone und eine kleine Bohrung 5 für eine in der Zeichnung ebenfalls nicht dargestellte Temperaturmesssonde auf. Außerdem sind an der Schweißkeilaufhängung 3' Befestigungslöcher 6 zur Befestigung an einem Gestell einer Schweißvorrichtung vorgesehen.

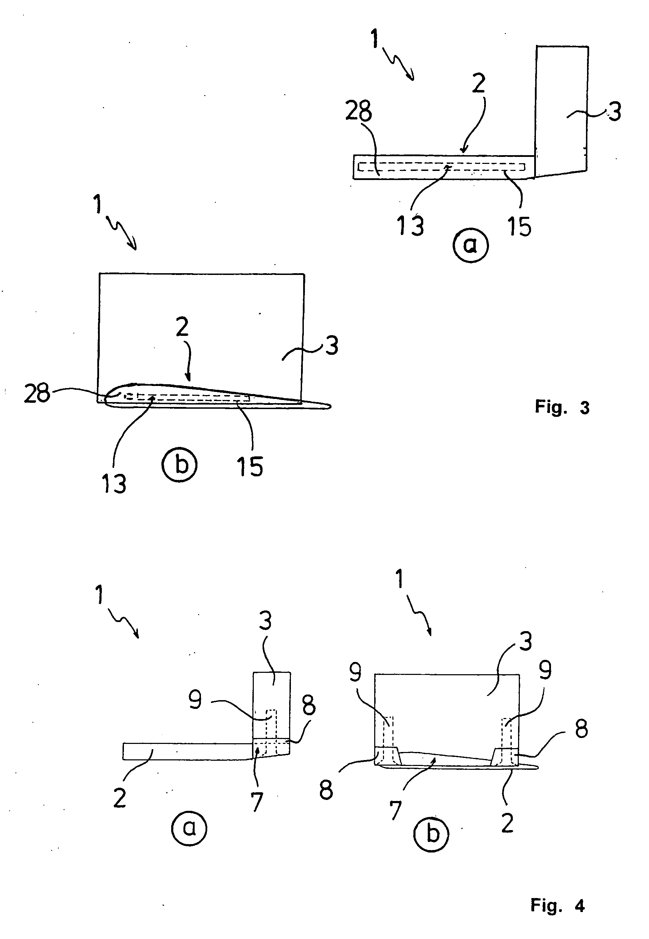

Figuren 2, 3 zeigen einen ersten bzw. zweiten erfindungsgemäßen Heizkeil 1, der im Wesentlichen eine aus der Figur 1 bekannte Kontur aufweist. Dabei sind der Schweißkeil 2 und die Schweißkeilaufhängung 3 als separate Teile ausgebildet und lösbar miteinander verbunden. Bei den beiden dargestellten Ausführungsbeispielen weist die Schweißkeilaufhängung 3, die vorzugsweise aus Stahl oder Silber hergestellt ist, seitlich eine Stützstruktur 28 aus Metall auf, die sich im Wesentlichen über die gesamte Länge und/oder Breite eines elektrischen keramischen Heizwiderstandes 13 erstreckt und diesen mechanisch stabilisiert.

Bei dem ersten Ausführungsbeispiel (Figur 2) handelt es sich um eine flache plattenförmige Stützstruktur 28, die im Innern des Schweißkeils 3 angeordnet ist und die sich quer zu der Vorschubrichtung des Heizkeils zwischen den Seitenkanten erstreckt. Dabei ist der Körper des Schweißkeils 2 aus einem nicht leitfähigen Keramikmaterial hergestellt und bildet den Träger 15 für die Leitschicht 12 des Heizwiderstandes 13, die außen auf den Körper aufgebracht ist. Bei dem zweiten Ausführungsbeispiel (Figur 3) umschließt die Stützstruktur 28 den Schweißkeil 2 in wesentlichen Teilen. Als wesentliches Teil wird mindestens der Heizwiderstand 13 angesehen, der plattenförmig ausgebildet ist und dessen Leitschicht 12 auf einer ebenen keramischen Trägerplatte 15 aufgebracht ist. Dazu weist die Stützstruktur 28, die als keilförmiger Metallmantel ausgebildet und aus einem Metallblock hergestellt ist, einen Aufnahmeraum auf, in den der Heizwiderstand 13 eingebettet ist. In beiden Ausführungsbeispielen ist die Leitschicht 12 vorzugsweise durch eine keramische Deckschicht geschützt, die in den Figuren 2, 3 nicht dargestellt ist. Außerdem ist in beiden Fällen die Stützstruktur 28 aus einem korrosionsbeständigen Metall hergestellt. Die elektrischen Anschlussleitungen zur Kontaktierung des Heizwiderstandes ist in allen Figuren der Zeichnung nicht dargestellt. Sie erfolgt mit den dem Fachmann geläufigen Methoden.

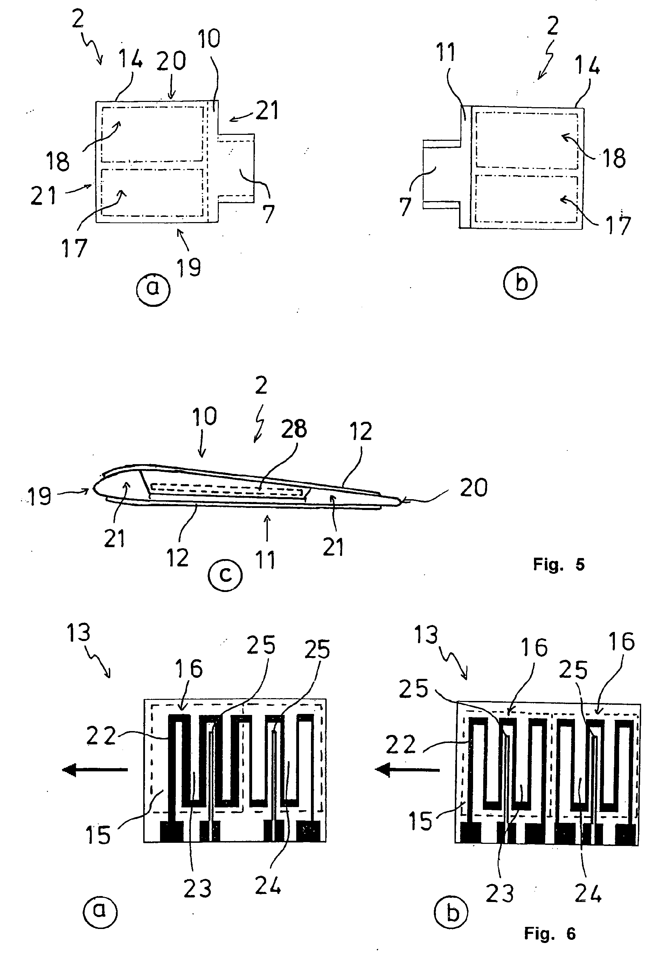

Figur 4 zeigt in den schematischen Darstellungen 4a, 4b eine ersten Befestigungsart des erfindungsgemäßen Heizkeils 1 gemäß den Figuren 2, 3. Der Schweißkeil 2, der in Figur 5 in anderen Ansichten nochmals dargestellt ist, ist aus keramischem Material hergestellt und an der Schweißkeilaufhängung 3 klemmend befestigt. Dazu weist der Schweißkeil 2, wie aus den Figuren 5a, 5b ersichtlich, einen vorzugsweise konischen seitlich vom Schweißkeil 2 abstehenden Fortsatz 7 auf, der mit zwei keilförmigen Gegenstücken 8 des Heizkeils 1 an die Schweißkeilaufhängung 3 gepresst ist. Dabei werden die Gegenstücke 8 von Befestigungsschrauben 9 an der Schweißkeilaufhängung 3 fixiert. Die Befestigungsstruktur 28 des Schweißkeils 2 reicht bis in den Fortsatz 7.

Figur 5 zeigt in den Figuren 5a, 5b den Schweißkeil 2 aus Figur 2 in Draufsicht von oben und von unten. Wie aus der vergrößerten Seitenansicht 5c zu entnehmen ist, weist der Schweißkeil 2 auf einer Oberseite 10 und einer Unterseite 11 eine Leitschicht 12 eines Heizwiderstandes 13 auf, die von einer in der Zeichnung nicht dargestellten Deckschicht geschützt ist. Der keramische Körper 14 des Schweißkeils 2 bildet einen Träger 15 für einen Heizleiter 16, der als Struktur der Leitschicht 12 ausgebildet ist. Die Leitschicht 12 ist, wie aus der Figur 6 entnehmbar, in verschiedenen Bereichen der Ober-/Unterseite 10, 11 unterschiedlich strukturiert. Die Bereiche unterschiedlicher Struktur bestimmen Temperaturzonen 17, 18, wobei die jeweiligen Temperaturzonen 17 bzw. 18 einander gegenüberliegend auf der Oberseite 10 und der Unterseite 11 des Schweißkeils 2 angeordnet sind. Die jeweils zwei Temperaturzonen 17, 18 sind in Vorschubrichtung des Heizkeils 1 von einer Vorderkante 19 zu einer Hinterkante 20 hin hintereinander angeordnet und erstrecken sich seitwärts bis zu Seitenkanten 21 des Schweißkeils 2, wobei deren Temperaturen variabel und unterschiedlich zueinander einstellbar sind. In ähnlicher Weise werden bei dem zweiten, nicht im Detail dargestellten Ausführungsbeispiel, die Temperaturzonen 17, 18 durch unterschiedliche Strukturen der Leitschicht 12 des plattenförmigen Heizwiderstandes 13 bestimmt, das sich im Innern des Schweißkeils 2 zwischen den Seitenkanten 21 über eine wesentlichen Bereich der in Vorschubrichtung gemessenen Länge des Heizkeils1 erstreckt.

Die Figur 6 zeigt beispielhaft zwei Strukturen der Leitschicht 12. Der Heizwiderstand 13, der vorzugsweise auf der Ober-/Unterseite 10, 11 des Schweißkeils 2 gleich ausgebildet ist, weist sich mäanderförmig zwischen den Seitenkanten 21 erstreckende Leiterbahnen 22 auf, deren Bahnquerschnitt und Bahnabstand in den in der Figur 6a dargestellten Ausführungsbeispiel über die Länge des Heizwiderstandes 13 unterschiedlich ausgebildet sind. In einem ersten Heizabschnitt 23 des Heizwiderstandes 13, der der ersten Temperaturzone 17 zugeordnet ist, sind die Bahnbreiten der Leiterbahnen 22 größer als in dem zweiten Heizabschnitt 24, der die zweite Temperaturzone 18 bestimmt. Außerdem unterscheiden sich noch die Abstände der Leiterbahnen 22 in den Heizabschnitten 23, 24 voneinander. Die in Vorschubrichtung des Heizkeils 1 vordere Temperaturzone 17 weist gegenüber der anschließenden Temperaturzone 18 eine geringere Temperatur auf, so dass in der Zeichnung nicht dargestellte Kunststoffbahnen in der Temperaturzone 17 vorgewärmt und anschließend in der Temperaturzone 18 aufgeschmolzen werden. Es ist auch denkbar, die Leitschicht 12 der Ober-/ Unterseite 10, 11 unterschiedlich zu strukturieren, um unterschiedlich dicke Kunststoffbahnen miteinander zu verbinden. Figur 6b zeigt zwei Heizleiter 16, die in Folge auf den Körper 14 auf einer Oberseite 10 und/oder einer Unterseite 11 aufgebracht sind. Die Heizleiter 16 sind nicht miteinander verbunden und demnach einzeln steuer- oder regelbar. Sie bilden die Heizabschnitte 23, 24 des Heizwiderstandes 13. In den Heizabschnitten 23, 24 sind in beiden dargestellten Ausführungsbeispielen jeweils zwei Temperatursensoren 25 zwischen den sich mäanderförmig erstreckenden Leiterbahnen 22 angeordnet.

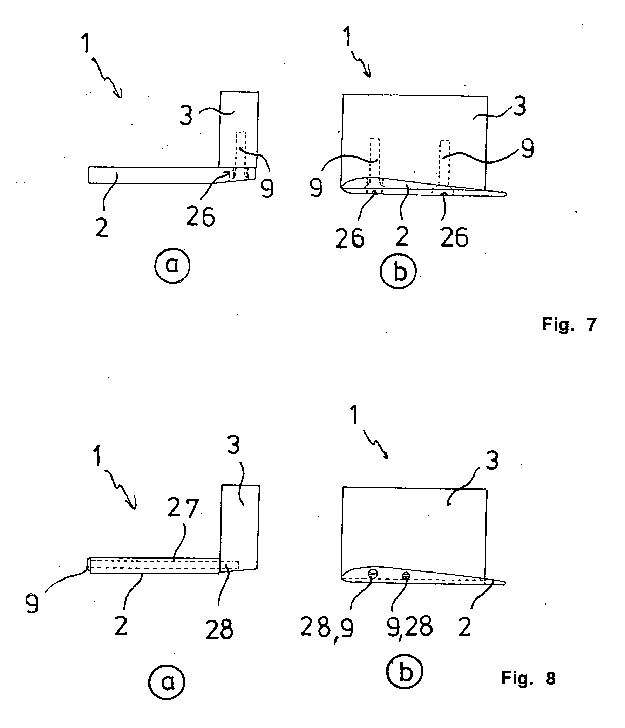

Figur 7 zeigt in den Darstellungen 7a, 7b eine zweite Befestigungsart des erfindungsgemäßen Heizkeil 1. Der seitlich abstehende Fortsatz 7 erstreckt sich dabei jedoch von der Vorderkante 19 bis zu der Hinterkante 20 des Schweißkeils 2. Er weist außerdem noch sich senkrecht zum Fortsatz 7 gerichtete Schraublöcher 26 auf, die sich in der Befestigungsstruktur 28 fortsetzen und durch die sich die Befestigungsschrauben 9 erstrecken, mit denen der Schweißkeil 2 an die Schweißkeilaufhängung 3 angepresst ist.

Figur 8 zeigt in den Darstellung 8a, 8b eine dritte Befestigungsart für den erfindungsgemäßen Heizkeil 1, bei dem der Heizwiderstand 13 wie vorstehend beschrieben ausgebildet ist, wobei die Befestigung des Schweißkeils 2 an der Schweißkeilaufhängung 3 mittels Befestigungsschrauben 9 erfolgt, die den Schweißkeil 2 senkrecht zu den Seitenkanten 21 durchdringen. Dazu weist der Schweißkeil 2 quer verlaufende Kanäle 27 auf, in denen sich die Befestigungsschrauben 9 als metallische Stützstruktur 28 in Form zweier Rippen erstrecken.

## Patentansprüche

1. Elektrischer Heizkeil (1) mit einem Schweißkeil (2) und einer Schweißkeilaufhängung (3) aus Metall zur Verwendung für eine Schweißeinrichtung zum nahtförmigen Verbinden von Kunststoffbahnen, wobei der Schweißkeil (2) mindestens einen elektrischen Heizwiderstand (13) mit einem Heizleiter (16) aufweist, der als Leitschicht (12) stoffschlüssig auf einem keramischen Träger (15) aufgebracht und vorzugsweise von einer keramischen Deckschicht geschützt ist, **dadurch gekennzeichnet, dass** die Schweißkeilaufhängung (3) seitlich eine Stützstruktur (28) aus Metall aufweist, die sich im Wesentlichen über die gesamte Länge und/oder Breite des elektrischen Heizwiderstand (16) erstreckt und den Träger (15) des Heizwiderstandes (16) mechanisch stabilisiert.

2. Elektrischer Heizkeil nach Anspruch 1, **dadurch gekennzeichnet, dass** die Stützstruktur (28) im Innern des Schweißkeil (2) angeordnet ist und/oder den Schweißkeil (2) in wesentlichen Teilen umschließt.

3. Elektrischer Heizkeil nach Anspruch 1 oder 2, **dadurch gekennzeichnet, dass** das Metall der Schweißkeilaufhängung (3) Stahl oder Silber ist.

4. Elektrischer Heizkeil nach einem der vorangegangen Ansprüche, **dadurch gekennzeichnet, dass** der elektrische Heizwiderstand (13) eine flache vorzugsweise ebene Form aufweist, wobei die Stützstruktur (28) keilförmig ausgebildet und der Heizwiderstand (13) von der Stützstruktur (28) im Innern aufgenommen ist.

5. Elektrischer Heizkeil nach einem der vorangegangen Ansprüche 1 - 3, **dadurch gekennzeichnet, dass** der elektrische Heizwiderstand (13) eine flache keilähnliche Form aufweist, wobei die Stützstruktur (28) von dem Heizwiderstand (13) im Innern aufgenommen ist.

6. Elektrischer Heizkeil nach einem der vorangegangen Ansprüche, **dadurch gekennzeichnet, dass** der Schweißkeil (2) lösbar an der Schweißkeilaufhängung (3) befestigt ist.

7. Elektrischer Heizkeil nach einem der vorangegangen Ansprüche, **dadurch gekennzeichnet, dass** als Material für die Leitschicht (12) ein Metall, eine Metalllegierung oder eine elektrisch leitfähige Keramik verwendet ist.

8. Elektrischer Heizkeil nach einem der vorangegangen Ansprüche, **dadurch gekennzeichnet, dass** der Schweißkeil (2) mindestens zwei Temperaturzonen (17, 18) mit unterschiedlich variabel einstellbarer Temperatur aufweist, die vorzugsweise in Vorschubrichtung des Heizkeils (1) hintereinander angeordnet sind.

9. Elektrischer Heizkeil nach einem der vorangegangen Ansprüche, **dadurch gekennzeichnet, dass** der Heizwiderstand (16) einen Temperatursensor (25) aufweist, der als Leitschicht (12) auf dem Träger (15) aufgebracht ist, wobei der Heizwiderstand (13) und der Temperatursensor (25) vorzugsweise von einer gemeinsamen Leitschicht (12) gebildet sind.

10. Elektrischer Heizkeil nach einem der vorangegangen Ansprüche, **dadurch gekennzeichnet, dass** der Heizwiderstand (13) mindestens eine sich mäanderförmig erstreckende Leiterbahn (22) als Heizleiter (16) aufweist, deren Bahnquerschnitt und/oder Bahnabstand über die Länge des Heizwiderstandes (13) unterschiedlich ausgebildet ist.

## Claims

1. Electric hot wedge (1), having a welding wedge (2) and a welding wedge attachment (3) made of metal, for use with a welding device for the seam-like connecting of plastic webs, wherein the welding wedge (2) comprises at least one electric heating resistor (13) having a heating conductor (16), which is bonded to a ceramic carrier (15) as a conductive layer (12) and is preferably protected by a ceramic cover layer, **characterized in that** the welding wedge attachment (3) has a support structure (28) made of metal on the side thereof, which substantially extends across the entire length and/or width of the electric heating resistor (16) and which mechanically stabilizes the carrier (15) of the heating resistor (16).

2. Electric hot wedge as claimed in Claim 1, **characterized in that** the support structure (28) is arranged in the interior of the welding wedge (2) and/or encloses the welding wedge (2) in substantial parts.

3. Electric hot wedge as claimed in Claim 1 or 2, **characterized in that** the metal of the welding wedge attachment (3) is preferably steel or silver.

4. Electric hot wedge as claimed in any one of the preceding Claims, **characterized in that** the electrical heating resistor (13) has a flat, preferably plane shape, with the support structure (28) having a wedge shape, and the heating resistor (13) being held in the interior of the support structure (28).

5. Electric hot wedge as claimed in any one of the preceding Claims 1 - 3, **characterized in that** the electrical heating resistor (13) has a flat, wedge-like shape, with the support structure (28) being held in the interior of the heating resistor (13).

6. Electric hot wedge as claimed in any one of the preceding Claims, **characterized in that** the welding wedge (2) is non-permanently attached to the welding wedge attachment (3).

7. Electric hot wedge as claimed in any one of the preceding Claims, **characterized in that** a metal, a metal alloy, or an electrically conductive ceramic material, is used as the material for the conductive layer (12).

8. Electric hot wedge as claimed in any one of the preceding Claims, **characterized in that** the welding wedge (2) has at least two temperature zones (17, 18) with individually and variably adjustable temperature that are preferably arranged one behind the other in the feed direction of the hot wedge (1).

9. Electric hot wedge as claimed in any one of the preceding Claims, **characterized in that** the heating resistor (16) comprises a temperature sensor (25) that is applied as a conductive layer (12) to the carrier (15), with the heating resistor (13) and the temperature sensor (25) preferably being formed by a common conductive layer (12).

10. Electric hot wedge as claimed in any one of the preceding Claims, **characterized in that** the heating resistor (13) comprises at least one conductor track (22) as heating conductor (16) that extends in the form of meanders, with the cross-section and/or the spacing of the conductor track (22) differing over the length of the heating resistor (13).

## Revendications

1. Coin chauffant électrique (1) comportant un coin de soudage (2) et une suspension de coin de soudage (3) en métal, destiné à être utilisé dans un dispositif de soudage pour la liaison par soudure de bandes de matière plastique, le coin de soudage (2) présentant au moins une résistance électrique chauffante (13) avec un conducteur chauffant (16) qui est appliqué par liaison de matière sur un support céramique (15) sous la forme d'une couche conductrice (12) et de préférence protégé par une couche de recouvrement céramique, **caractérisé en ce que** la suspension de coin de soudage (3) présente latéralement une structure de soutien (28) en métal qui s'étend sensiblement sur toute la longueur et/ou la largeur de la résistance électrique chauffante (16) et stabilise mécaniquement le support (15) de la résistance chauffante (16).

2. Coin chauffant électrique selon la revendication 1, **caractérisé en ce que** la structure de soutien (28) est disposée à l'intérieur du coin de soudage (2) et/ou entoure en grand partie le coin de soudage (2).

3. Coin chauffant électrique selon la revendication 1 ou la revendication 2, **caractérisé en ce que** le métal de la suspension de coin de soudage (3) est de l'acier ou de l'argent.

4. Coin chauffant électrique selon l'une des revendications précédentes, **caractérisé en ce que** la résistance électrique chauffante (13) présente une forme plate, de préférence plane, la structure de soutien (28) étant réalisée en forme de coin et la résistance chauffante (13) étant reçue par la structure de soutien (28) à l'intérieur.

5. Coin chauffant électrique selon l'une des revendications précédentes 1 à 3, **caractérisé en ce que** la résistance électrique chauffante (13) présente une forme plate en coin, la structure de soutien (28) étant reçue par la résistance chauffante (13) à l'intérieur.

6. Coin chauffant électrique selon l'une des revendications précédentes, **caractérisé en ce que** le coin de soudage (2) est fixé de manière amovible à la suspension de coin de soudage (3).

7. Coin chauffant électrique selon l'une des revendications précédentes, **caractérisé en ce que** le matériau utilisé pour la couche conductrice (12) est un métal, un alliage métallique ou une céramique électroconductrice.

8. Coin chauffant électrique selon l'une des revendications précédentes, **caractérisé en ce que** le coin de soudage (2) présente au moins deux zones de température (17, 18) avec une température réglable différemment de façon variable, qui sont de préférence disposées l'une derrière l'autre dans la direction d'avance du coin chauffant (1).

9. Coin chauffant électrique selon l'une des revendications précédentes, **caractérisé en ce que** la résistance chauffante (16) présente un capteur de température (25) qui est appliqué sur le support (15) sous la forme d'une couche conductrice (12), la résistance chauffante (13) et le capteur de température (25) étant de préférence formés par une couche conductrice (12) commune.

10. Coin chauffant électrique selon l'une des revendications précédentes, **caractérisé en ce que** la résistance chauffante (13) présente au moins une piste conductrice (22) s'étendant de manière sinueuse en tant que conducteur chauffant (16), dont la section transversale de piste et/ou la distance des pistes est différente sur la longueur de la résistance chauffante (13).
